**Europäisches Patentamt**

**European Patent Office**

**Office européen des brevets**

(19)

(11) Veröffentlichungsnummer : **0 013 548**
**B1**

(12)

# EUROPÄISCHE PATENTSCHRIFT

(45) Veröffentlichungstag der Patentschrift :
**19.05.82**

(51) Int. Cl.³ : **B 30 B 9/24, B 01 D 33/04, B 01 D 33/36, C 02 F 11/00**

(21) Anmeldenummer : 79890065.0

(22) Anmeldetag : 18.12.79

(54) **Vorrichtung zum Entwässern von wasserhaltigen Stoffen.**

(30) Priorität : 04.01.79 AT 76/79

(43) Veröffentlichungstag der Anmeldung :
**23.07.80 (Patentblatt 80/15)**

(45) Bekanntmachung des Hinweises auf die Patenterteilung : **19.05.82 Patentblatt 82/20**

(84) Benannte Vertragsstaaten :
**BE CH DE FR IT NL SE**

(56) Entgegenhaltungen :
FR - A - 2 047 774
US - A - 2 554 968
US - A - 3 106 152
US - A - 4 066 548

(73) Patentinhaber : **VOEST-ALPINE Aktiengesellschaft**
**Friedrichstrasse 4**
**A-1011 Wien (AT)**

(72) Erfinder : **Despalmes, Friedrich**
**Wiednergürtel 50/10**
**A-1040 Wien (AT)**

(74) Vertreter : **Kretschmer, Adolf, Dipl.-Ing.**
**Schottengasse 3a**
**A-1014 Wien (AT)**

Imprimerie Jouve, 18, rue St-Denis, 75001 Paris, France

# Vorrichtung zum Entwässern von wasserhaltigen Stoffen.

Die Erfindung bezieht sich auf eine Vorrichtung zum Entwässern von wasserhaltigen Stoffen, insbesondere von in Kläranlagen anfallendem Schlamm, bei welcher der vorzugsweise bereits vorentwässerte Stoff zwischen umlaufenden wasserdurchlässigen Bändern bzw. Siebbändern durch einen von diesen begrenzten Spalt hindurchgeführt wird, wobei die Siebbänder od. dgl. in Richtung zum Spalt durch endlose über Umlenk- und Antriebssterne umlaufende Plattenketten abgestützt sind, welche in Richtung zum Spalt anstellbar sind, und wobei die Plattenketten über ihre gesamte Länge mit Rollen ausgestattet sind, welche gegen Rollenlaufbahnen abgestützt sind, wobei wenigstens eine der Rollenlaufbahnen in Richtung quer zum Spalt willkürlich verstellbar ist, wobei vorzugsweise die Rollenlaufbahnen starr an Rahmen angeordnet sind, an welchen auch die Umlenk- und Antriebs-Kettensterne gelagert sind und wenigstens einer der Rahmen in Richtung quer zum Spalt verstellbar ist, während der andere Rahmen ortsfest angeordnet sein kann.

Vorrichtungen, wie sie beispielsweise aus der DE-A 25 10 010 bekannt geworden sind, weisen den Vorteil auf, daß durch die umlaufenden Plattenketten das Siebband od. dgl. über die ganze Fläche abgestützt wird und daher ein verhältnismäßig großer Druck auf den zu entwässernden Stoff ausgeübt werden kann. Eine solche Vorrichtung wird daher üblicherweise als Hochdruckstufe hinter einer mit niedrigerem Druck arbeitenden Entwässerungsvorrichtung angeordnet, bei welcher der zu entwässernde Stoff beispielsweise zwischen Siebbändern über Walzen geführt ist. Durch eine solche Vorrichtung kann in Anbetracht der ganzflächigen Abstützung des Siebbandes durch die umlaufenden Plattenketten ein höherer Entwässerungsgrad erreicht werden. Bei der bekannten Anordnung erfolgt die Anstellung der Plattenketten in Richtung zum Spalt durch auf die Führungsplatte für die Rollen wirkende Federn. Der Entwässerungsdruck ist hiebei durch die Federn begrenzt und es ist die Spaltbreite nur durch den Aufbau des Druckes in dem zu entwässernden Stoff bestimmt. Es ist somit der Durchsatz des zu entwässernden Stoffes durch den Spalt bei gleichbleibendem Entwässerungsdruck unveränderbar. Wenn sich der Spalt vergrößert, so wird auch durch die zusammengedrückten Federn der auf den Stoff ausgeübte Druck vergrößert und es kann somit nicht der Entwässerungsdruck unabhängig von der Durchsatzmenge eingestellt werden.

Bei weiteren, beispielsweise aus der US-A-3 106 152, der US-A- 4 066 548 und der FR-A-2 047 774 bekannten Vorrichtungen ist es bereits bekannt, zwecks Anpassung des Entwässerungsdruckes in Vorrichtungen zum Entwässern von wasserhaltigen Stoffen wenigstens eine der Rollenlaufbahnen für die wasserdurchlässigen Bänder in Richtung quer zum zu entwässernden Stoffstrom willkürlich verstellbar auszubilden. Bei der beispielsweise aus der US-A- 4 066 548 bekannten Vorrichtung dieser Art sind Federn zur Einstellung des Anpreßdruckes vorgesehen, wobei jedoch jede Veränderung der Vorspannung der Federn gleichzeitig eine Veränderung der Spaltbreite zur Folge hat. In der FR-A- 2 047 774 wurde bereits vorgeschlagen, die Verstellung der Rahmen an einem Ende der Siebbänder über hydraulisch betätigte Exzenter vorzunehmen. Jedoch ist bei dieser bekannten Konstruktion das andere Ende der Rahmen an starren Achsen angelenkt, so daß eine willkürliche Verstellung der Spaltbreite über die gesamte Länge des Spaltes nicht ohne weiteres möglich ist.

Die Erfindung zielt nun darauf ab, die Vorrichtung der eingangs genannten Art dahingehend weiterzubilden, daß über die gesamte Länge des Spaltes eine jeweils genau definierte Spaltbreite eingestellt werden kann, und zielt weiters darauf ab, daß die durch Federn aufgebrachte Preßkraft unahängig von der Einstellung der Spaltweite eingestellt werden kann. Zur Lösung dieser Aufgabe besteht die Erfindung im wesentlichen darin, daß das dem Einlaufende des Spaltes zugewendete Ende der Rollenlaufbahn bzw. des verstellbaren Rahmens und das dem Auslaufende des Spaltes zugewendete Ende der Rollenlaufbahn bzw. des verstellbaren Rahmens unabhängig vom jeweils anderen Ende in Richtung quer zum Spalt verstellbar ist, daß im Bereich der beiden Enden der Rahmen oder der Rollenlaufbahnen Exzenter gelagert sind, welche an jeweils einem der Rahmen oder einer der Rollenlaufbahnen verdrehbar gelagert und durch unabhängige hydraulische Zylinder verdrehbar sind und an welchen Zug- und Druckstangen angreifen, die an dem anderen Rahmen oder der anderen Rollenlaufbahn angreifen, daß die Zug- und Druckstangen unter Zwischenschaltung von Federn an dem betreffenden Rahmen oder der Rollenlaufbahn angreifen und daß die Federn von Druckfedern gebildet sind, welche in Töpfen angeordnet sind, welche mit dem betreffenden Rahmen starr verbunden sind, daß die Zug- und Druckstangen durch einen Federteller des Topfes, gegen welchen die Druckfeder abgestützt ist, hindurchgeführt sind, wobei das andere Ende der Druckfeder gegen den oberen Boden des Topfes abgestützt ist und der obere Boden mit dem Mantel des Topfes starr verbunden und gegen einen mit der Zug- und Druckstange verbundenen Flansch abgestützt ist.

Durch diese Ausbildung wird eine Verstellung des Rahmens bzw. der Rollenlaufbahn sowohl am Einlauf- als auch am Auslaufende sichergestellt, wodurch sich der Verlauf des Spaltes optimal an das jeweils zu entwässernde Gut anpassen läßt. Wenn nur die Rollenlaufbahnen quer zum Spalt verstellbar sind, so ist eine Veränderung der Spaltbreite nur in Grenzen möglich. Dadurch, daß die gesamten Rahmen mit Rollenlaufbahnen und Kettensternen relativ zueinander in Richtung quer zum Spalt verstellbar sind, kann die Spaltbreite beliebig entsprechend den anfallenden Durchsatzmengen verändert werden. Der Spalt wird üblicherweise an der Einlaufstelle größer als an der Auslaufstelle und läuft keilförmig zur Auslaufstelle zuzammen. Dadurch, daß der Spalt am Einlaufende und am Auslaufende unabhängig eingestellt werden kann, kann der Keilwinkel je nach den Erfordernissen verändert werden und es kann auf diese Weise dem Entwässerungsgrad des in den Spalt eintretenden Stoffes und dem gewünschten Entwässerungsgrad an der Austrittsstelle sowie auch der Zusammensetzung des Stoffes optimal Rechnung getragen werden. Durch die Maßnahme, zur Verstellung der Rahmen bzw. der Rollenlaufbahnen Exzenter einzusetzen, können große Kräfte aufgenommen werden und es läßt sich mit relativ kleinen Stellkräften die gewünschte Spaltbreite mit Sicherheit einstellen. Dadurch, daß die Zug- und Druckstangen unter Zwischenschaltung von Federn an den betreffenden Rahmen oder des Rollenlaufbahn angreifen, wird ein Answeichen der Plattenketten ermöglicht, wenn in dem zu entwässernden Stoff Festkörper vorhanden sind. Hiebei ist die Anordnung erfindungsgemäß so getroffen, daß die Federn von Druckfedern gebildet sind, welche in Töpfen angeordnet sind, welche mit dem betreffenden Rahmen starr verbunden sind, daß die Zug- und Druckstangen durch einen Federteller des Topfes, gegen welchen die Druckfeder abgestützt ist, hindurchgeführt sind, wobei das andere Ende der Druckfeder gegen den oberen Boden des Topfes abgestützt ist und der obere Boden mit dem Mantel des Topfes starr verbunden und gegen einen mit der Zug- und Druckstange verbundenen Flansch abgestützt ist. Durch die Anordnung der Federn in Töpfen wird eine Verschmutzung, welche insbesondere bei der Verwendung der Vorrichtung für die Entwässerung von Klärschlamm auftreten würde, vermieden. Dadurch, daß die Zug- und Druckstangen durch die vorgespannten Federn mit ihrem Flansch gegen den Topf gedrückt sind, wirkt in der normalen Betriebsstellung die aus Exzenter und Zug- und Druckstangen gebildete Verstellanordnung als fixe Verstellanordnung, welche die Spaltbreite eindeutig bestimmt. Nur wenn beispielsweise durch in dem zu entwässernden Stoff befindliche Festkörper der auf die Plattenketten ausgeübte Druck so groß wird, daß die Vorspannung der Druckfedern überdrückt wird, wird durch diese Druckfedern eine Ausweichbewegung ermöglicht. Bei dieser Ausbildung ergibt sich zusätzlich der Vorteil einer überaus kompakten Baueinheit, über welche die Spaltweite und unabhängig von der Spaltweite der Preßdruck festgelegt werden kann.

Die Federvorspannung kann durch auf die Zugstange aufgeschraubte Muttern beliebig eingestellt werden, ohne daß hiedurch eine Veränderung der durch den Exzenter vorgegebenen Spaltbreite erfolgt. Es kann daher zweckmäßig am Exzenter oder an der Exzenterwelle ein Zeiger angeordnet sein, welcher auf einer relativ zum Exzenter ortsfesten Skala spielt. Auf diese Weise wird die Einstellung der gewünschten Spaltbreite anhand des Zeigers der Skala erleichtert.

Zweckmäßig ist der verstellbare Rahmen am ortsfesten Rahmen gegen Verschiebung in Längsrichtung des Spaltes gesichert geführt. Hierdurch ergibt sich eine konstruktive Vereinfachung.

Vorzugsweise sind hiebei gemäß der Erfindung die Exzenter am ortsfesten Rahmen oder an der ortsfesten Rollenlaufbahn gelagert, während die Zug- und Druckstangen am verstellbaren Rahmen oder an der verstellbaren Rollenlaufbahn angreifen. Dadurch ergibt sich eine günstige Anordnung für die Betätigung des Exzenter. Vorzugsweise sind an jeder Seite der Plattenkette Exzenter gelagert, welche über die Exzenterwelle miteinander gekuppelt sind. Solche Plattenketten können verhältnismäßig breit gewählt werden, und dadurch, daß nun die Exzenter an beiden Seiten der Plattenketten miteinander starr gekuppelt sind, wird eine gleichmäßige Breite des Spaltes über die gesamte Breite der Plattenketten gewährleistet.

Vorzugsweise ist mit dem Exzenter oder der Exzenterwelle ein Exzenterhebel starr verbunden, an welchem ein hydraulischer Stellzylinder angreift, welcher vorzugsweise mittels einer Handpumpe mit Druckmittel beaufschlagbar ist. Durch die hydraulischen Zylinder ist eine verhältnismäßig billige und leicht zu betätigende Einstellmöglichkeit geschaffen und wenn die hydraulischen Zylinder mittels einer Handpumpe mit Druckmittel beaufschlagt werden, so ist die Anordnung nicht an eine bestehende hydraulische Anlage gebunden.

In der Zeichnung ist die Erfindung anhand eines Ausführungsbeispieles schematisch veranschaulicht.

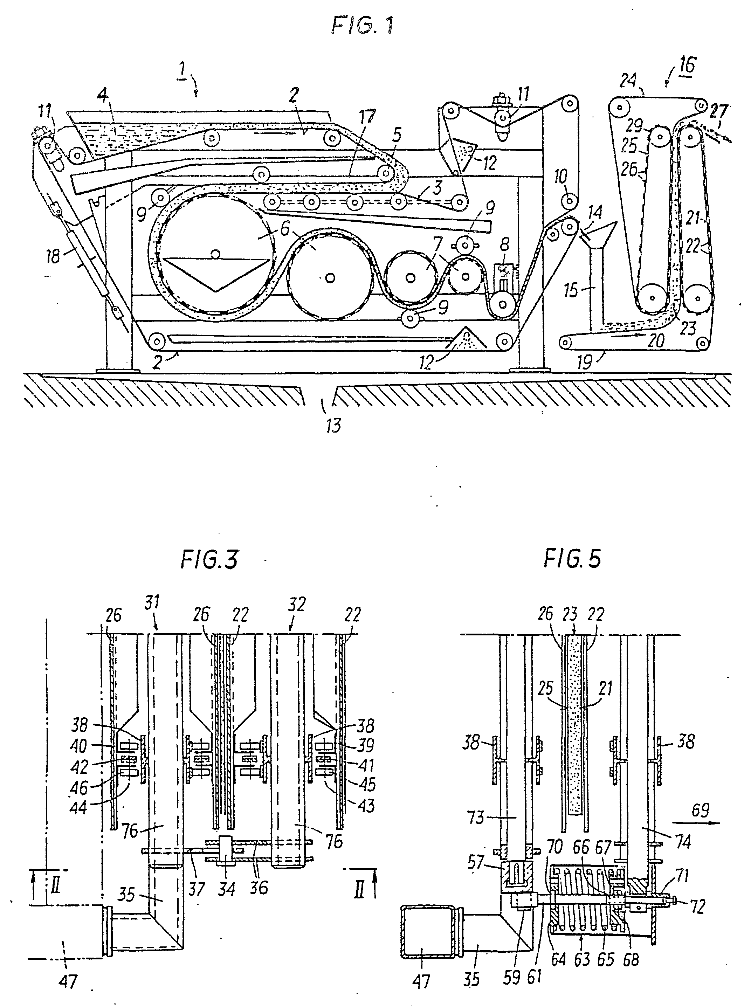

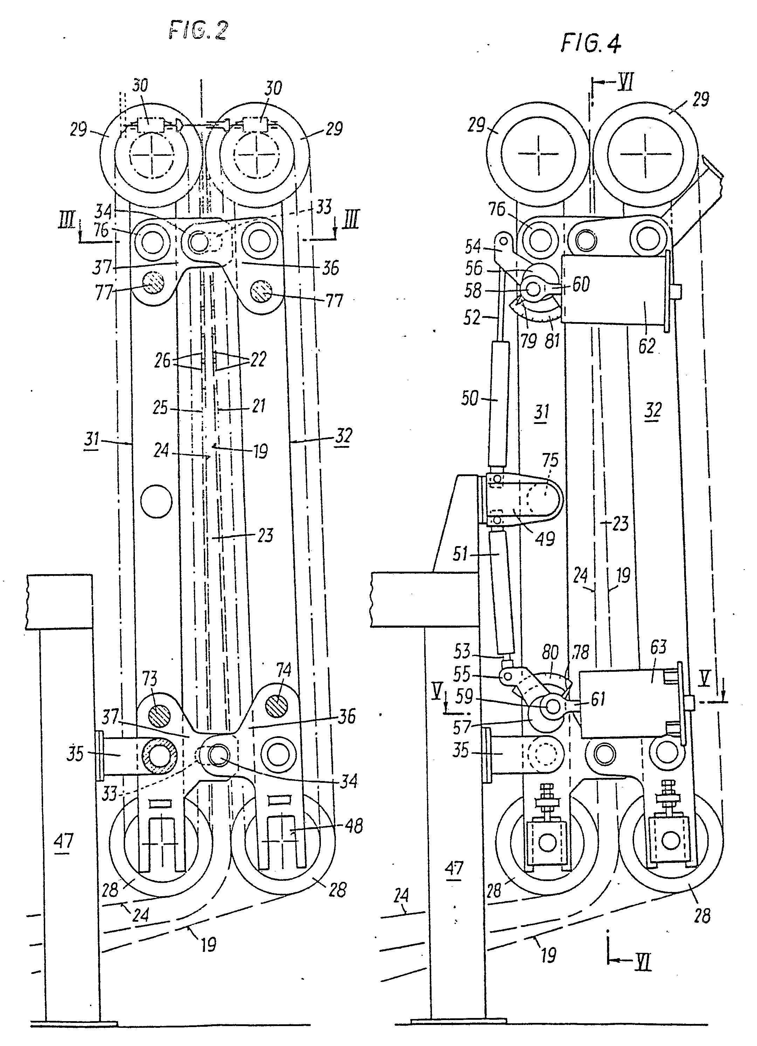

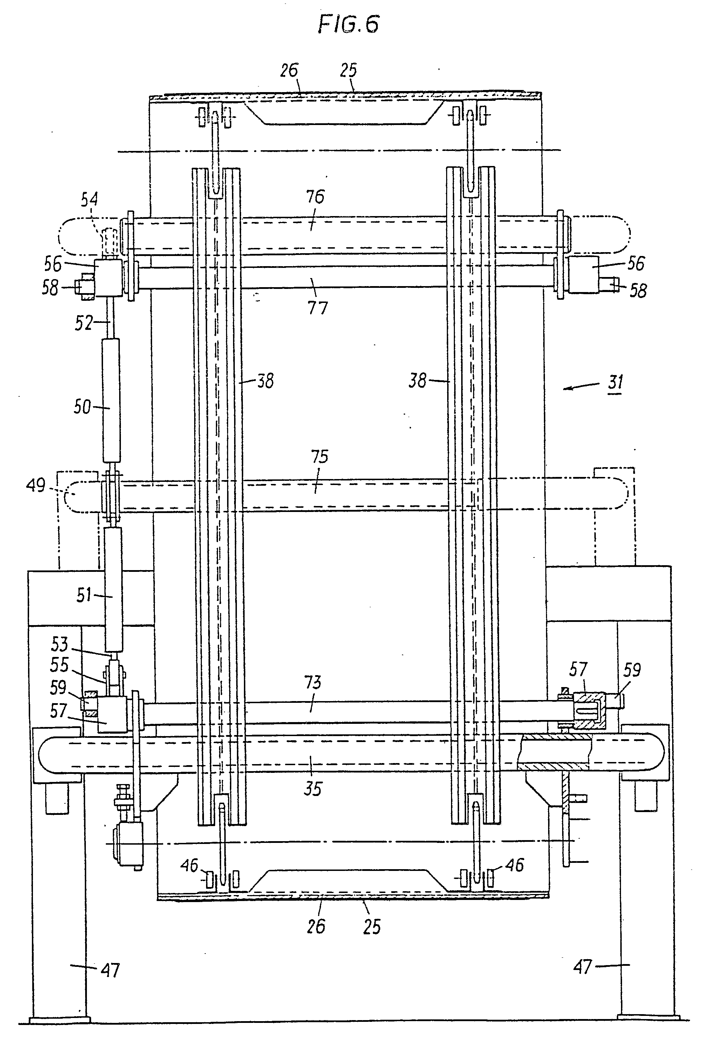

In dieser zeigen Fig. 1 eine schematische Ansicht einer Siebbandpresse mit einer Druckentwässerungs- und einer Hochdruckentwässerungsstufe, Fig. 2 eine Teilansicht der Hochdruckentwässerungsstufe, Fig. 3 einen Schnitt nach der Linie III - III der Fig. 2, Fig. 4 eine Ansicht analog der Fig. 2 mit der Verstellvorrichtung, Fig. 5 einen Schnitt nach Linie V - V der Fig. 4 und Fig. 6 einen Schnitt nach der Linie VI - VI der Fig. 4.

In Fig. 1 ist die Druckentwässerungsstufe 1 mit Siebbändern 2 und 3 ausgestattet. Das Siebband 2 übernimmt an der Stelle der Schlammzuführung 4 das zu entwässernde Material und wird nach Umlenkung über die Umlenkrolle 5 mit dem zweiten Siebband 3 zusammengeführt. Die beiden Siebbänder werden über perforierte Preßwalzen 6 und Preßwalzen 7 geführt, wobei die Bandspannung durch die Preßwalzenverstellung 8 einstellbar ist. Es sind auch Druckrollen 9 vorgesehen, welche die Siebbänder gegen die Preßwalzen andrücken. Mit 10 sind die Antriebswalzen bezeichnet, wobei sowohl das Siebband 2, als auch das Siebband 3 in geschlossenem Kreislauf geführt wird. Der Filterbandlauf wird bei 11 reguliert. Mit 12 sind Siebreinigungsanlagen bezeichnet. Der Filtratablauf ist mit 13 bezeichnet. Das entwässerte Material wird von Schabern 14 von der Oberfläche des Filterbandes 2 abgenommen und über einen Trichter 15 der Hochdruckstufe 16 zugeführt. Bei der Druckentwässerung ist an der Stelle des Zusammentreffens der Siebbänder 2 und 3 eine Keilzone 17 vorgesehen, wobei der Anstellwinkel dieser Keilzonen durch die Strebe 18 eingestellt werden kann.

Das durch den Trichter 15 gelangende weitgehend entwässerte Material fällt auf ein weiteres Siebband 19, welches in Richtung des Pfeiles 20 über umlaufende Plattenketten 21, deren Platten mit 22 bezeichnet sind, geführt wird. Auf diese Weise wird das Material in einer weiteren Keilzone 23 einer weiteren Entwässerung unterworfen. Die Keilzone 23 wird hiebei vom Siebband 19, welches über die Plattenketten 21 geführt wird, und von einen Siebband 24, welches über Plattenketten 25 geführt ist, deren Platten mit 26 bezeichnet sind, gebildet. Das auf diese Weise getrocknete Material kann über Schaber 27 vom Siebband 19 abgelöst werden, wobei in der Hochdruckstufe 16 gleichfalls nicht näher dargestellte Siebreinigungseinrichtungen und Einrichtungen für die Einstellung der Siebspannung vorgesehen sind.

Der Aufbau dieser Hochdruckstufe 16 wird in den Fig. 2 bis 6 näher dargestellt. Die endlosen Plattenketten 21 und 25 laufen über Umlenksterne 28 und Anstriebssterne 29, wobei der Antrieb der Antriebssterne 29 über eine schematisch dargestelltes Schneckengetriebe 30 erfolgt. Die Kettensterne 28 und 29 sind jeweils für eine Plattenkette an einem Träger festgelegt, wobei der Träger 31 für die Plattenketten 25 starr festgelegt ist und der Träger 32 für die Plattenketten 21 relativ zum Träger 31 verstellbar gelagert ist. Die Verstellbarkeit des Trägers 32 relativ zum Träger 31 ist durch die Dimensionierung von Langlöchern 33 begrenzt, in welchen Anlenkbolzen 34 des jeweils anderen Trägers verschiebbar geführt sind. Der Übersichtlichkeit halber wurde in Fig. 2 der in Fig. 1 prinzipiell dargestellte Lauf der Siebbänder 19 und 24 nicht dargestellt. Der Träger 31 ist über eine Rohrkonstruktion 35 starr festgelegt.

In Fig. 3 ist die Anlenkung des Trägers 31 am Träger 32 im Schnitt dargestellt und es ist mit 34 ein Bolzen bezeichnet, welcher durch eine Lasche 36 des Trägers 32 hindurchgesteckt ist. Der Träger 31 weist gleichfalls eine Lasche 37 auf, welche das Langloch 33 trägt, in welchem der Bolzen 34 verschieblich gelagert ist. Die Träger 31 und 32 weisen Profile 38 auf, welche eine Rollennlaufbahn bilden. Die Platten 22 und 26 sind mit den Ketten 21 und 25 über abgewinkelte Kettenlaschen 39 und 40 verbunden. Die Ketten 41 und 42 der jeweiligen Rollenketten sind mit den Laschen 39 bzw. 40 über Achsen 43 und 44 verbunden, welche seitlich über die Laschen 39 bzw. 40 vorragen und die Laufrollen 45 bzw. 46 tragen, welche wieder an den Laufflächen 38 der jeweiligen Träger 31 bzw. 32 abgestützt sind. Durch die Verstellung der Träger 31 bzw. 32 wird gleichzeitig auch die jeweilige Lauffläche 38 verstellt und es kann somit der sich zwischen den Platten 22 bzw. 26 der in sich geschlossenen Plattenkette 21 bzw. 25 einstellende Spalt 23 präzise eingestellt werden.

Die Verstelleinrichtungen für die Laufbahnen 38 tragenden Träger 31 und 32 sind in Fig. 4 dargestellt, wobei hier der Übersichtlichkeit halber die Plattenketten nicht eingezeichnet sind. Der Träger 31 ist über die Rohrkonstruktion 35 starr am Fundament 47 festgelegt. An den Trägern 31 und 32 sind in Fig. 2 lediglich die Ausnehmungen 48 für die Aufnahme der Lager der Kettensterne angedeutet. Am Träger 31 sind an einer gemeinsamen Lasche 49 die Zylinder 50 und 51 von Zylinder-Kolben-Aggregaten festgelegt, deren jeweiligen Kolbenstangen 52 und 53 an Umlenkhebeln 54 und 55 angelenkt sind, welche eine Exzenterwelle 56 bzw. 57 verdrehen. Mit den auf dieser Exzenterwelle 56 bzw. 57 vorgesehenen Exzenterzapfen 58 bzw. 59 sind Zug- und Druckstangen 60 bzw. 61 verbunden, welche unter Zwischenschaltung von in Töpfen 62 bzw. 63 angeordneten Federn am Rahmen 32 angreifen.

In Fig. 5 ist diese Anordnung für die Zug- und Druckstange 61 näher dargestellt. Die Zug- und Druckstange 61 erstreckt sich durch den Boden 64 des Topfes 63, welcher einen Federteller der Feder 65 bildet. Der Boden 64 ist hiebei mit dem Mantel des Topfes 63 starr verbunden. Die Zugund Druckstange 61 trägt an ihrem dem Exzenter 57 abgewendeten Ende ein Gewinde 66. Die Zugund Druckstange 61 erstreckt sich auch durch einen Federteller 67, welcher gegen Muttern 68, welche auf das Gewinde 66 aufgeschraubt sind, abgestützt ist. Die Feder 65 ist somit zwischen den Federtellern 64 und 67 eingespannt und der Topf 63 ist am Rahmen 32 festgelegt. Wenn nun in den Keilspalt 23 größere Hindernisse eintreten, kann der Rahmen 32 dadurch in Richtung des Pfeiles 69 ausweichen, daß die Zug- und Druckstange 61 über den Federteller 67 die Feder 65 zusammendrückt. Die Vorspannung der Feder 65 kann durch die Muttern 68 eingestellt werden, da der den anderen Federteller bildende Boden 64 des Topfes 63 in der Normallage gegen einen auf die Stange 61 aufgeschweißten Ring 70 abgestützt ist.

Das dem Exzenter 57 abgewendete Ende der Zug- und Druckstange 61 ist axial verschieblich in einer Hülse 71 geführt, wobei der Endanschlag durch eine Schraube 72 vorgegeben werden kann.

Mit dem Exzenter 57 ist eine Exzenterwelle 73 gleichachsig verbunden, welche die Drehbewegung des Exzenters auf die andere Seite des Trägers 31 überträgt, wodurch die Breite des Keilspaltes 23 in den jeweiligen Querschnitten über die gesamte Länge der Platten 26 konstant gehalten wird, da in analoger Weise eine parallel zu den Platten 22 verlaufende Stange 74 im Träger 32 vorgesehen ist.

In Fig. 6 ist nur der Träger 31 dargestellt und es ist ersichtlich, daß dieser Träger von den Laufbahnen 38 und Rohren 35, 75 und 76 gebildet

ist. Die Bezugzeichen aus vorangehenden Figuren wurden beibehalten. Zusätzlich zu der Exzenterwelle 73 ist auch am oberen Ende des Trägers eine die Exzenter 56 verbindende Exzenterwelle 77 vorgesehen, welche die durch die hydraulische Strebe 50 bewirkte Verstellung auf die andere Seite des Trägers 31 überträgt. Eine Platte 26 det Plattenkette 25 ist am unteren Rand der Darstellung der Fig. 6 im Schnitt dargestellt.

In Fig. 4 sind die mit der Exzenterwelle 57 bzw. 56 verbundenen Zeiger 78 bzw. 79 dargestellt, welche auf ortsfest angeordneten Skalen 80 bzw. 81 spielen. Auf diese Weise kann die durch die Hydraulik erzielte Verstellung des Keilspaltes zwischen den Plattenketten 21 bzw. 25 in einfacher Weise abgelesen werden.

## Ansprüche

1. Vorrichtung zum Entwässern von wasserhaltigen Stoffen, insbesondere von in Kläranlagen anfallendem Schlamm, bei welcher der vorzugsweise bereits vorentwässerte Stoff zwischen umlaufenden wasserdurchlässigen Bändern bzw. Siebbändern (19, 24) durch einen von diesen begrenzten Spalt (23) hindurchgeführt wird, wobei die Siebbänder (19, 24) od. dgl. in Richtung zum Spalt (23) durch endlose über Umlenk- und Antriebssterne (28, 29) umlaufende Plattenketten (21, 25) abgestützt sind, welche in Richtung zum Spalt (23) anstellbar sind, und wobei die Plattenketten (21, 25) über ihre gesamte Länge mit Rollen (45, 46) ausgestattet sind, welche gegen Rollenlaufbahnen (38) abgestützt sind, wobei wenigstens eine der Rollenlaufbahnen (38) in Richtung quer zum Spalt (23) willkürlich verstellbar ist, wobei vorzugsweise die Rollenlaufbahnen (38) starr an Rahmen (31, 32) angeordnet sind, an welchen auch die Umlenk- und Antriebs-Kettensterne (28 und 29) gelagert sind und wenigstens einer der Rahmen (32) in Richtung quer zum Spalt (23) verstellbar ist, während der andere Rahmen (31) ortsfest angeordnet sein kann, dadurch gekennzeichnet, daß das dem Einlaufende des Spaltes (23) zugewendete Ende der Rollenlaufbahn (38) bzw. des verstellbaren Rahmens (32) und das dem Auslaufende des Spaltes (23) zugewendete Ende der Rollenlaufbahn (38) bzw. des verstellbaren Rahmens (32) unabhängig vom jeweils anderen Ende in Richtung quer zum Spalt verstellbar ist, daß im Bereich der beiden Enden der Rahmen (31, 32) oder der Rollenlaufbahnen (38) Exzenter gelagert sind, welche an jeweils einem der Rahmen (31) oder einer der Rollenlaufbahnen (38) verdrehbar gelagert und durch unabhängige hydraulische Zylinder verdrehbar sind und an welchen Zug- und Druckstangen (60 bzw. 61) angreifen, die an dem anderen Rahmen (32) oder der anderen Rollenlaufbahn (38) angreifen, daß die Zug- und Druckstangen (60 bzw. 61) unter Zwischenschaltung von Federn (65) an dem betreffenden Rahmen (32) oder der Rollenlaufbahn (38) angreifen und daß die Federn (65) von Druckfedern gebildet sind, welche in Töpfen (63) angeordnet sind, welche mit dem betreffenden Rahmen (32) starr verbunden sind, daß die Zug- und Druckstangen (60 bzw. 61) durch einen Federteller (67) des Topfes (63), gegen welchen die Druckfeder (65) abgestützt ist, hindurchgeführt sind, wobei das andere Ende der Druckfeder (65) gegen den oberen Boden (64) des Topfes (63) abgestützt ist und der obere Boden (64) mit dem Mantel des Topfes (63) starr verbunden und gegen einen mit der Zug- und Druckstange (60 bzw. 61) verbundenen Flansch (70) abgestützt ist.

2. Vorrichtung nach Anspruch 1, dadurch gekennzeichnet, daß der verstellbare Rahmen (32) am ortsfesten Rahmen (31) gegen Verschiebung in Längsrichtung des Spaltes (23) gesichert geführt ist.

3. Vorrichtung nach einem der Ansprüche 1 bis 2, dadurch gekennzeichnet, daß die Exzenter (56 bzw. 57) am ortsfesten Rahmen (31) oder an der ortsfesten Rollenlaufbahn (38) gelagert sind und die Zug- und Druckstangen (60 bzw. 61) am verstellbaren Rahmen (32) oder an der verstellbaren Rollenlaufbahn (38) angreifen und daß an jeder Seite der Plattenkette Exzenter (56 bzw. 57) gelagert sind, welche über eine Exzenterwelle (73 bzw. 77) miteinander gekuppelt sind.

4. Vorrichtung nach Anspruch 3, dadurch gekennzeichnet, daß mit dem Exzenter (56 bzw. 57) oder der Exzenterwelle (73 bzw. 77) ein Exzenterhebel (54 bzw. 55) starr verbunden ist, an welchem ein hydraulischer Stellzylinder (50 bzw. 51) angreift, welcher vorzugsweise mittels einer Handpumpe mit Druckmittel beaufschlagbar ist.

5. Vorrichtung nach einem der Ansprüche 1 bis 4, dadurch gekennzeichnet, daß am Exzenter (56 bzw. 57) oder an der Exzenterwelle (73 bzw. 77) ein Zeiger (78 bzw. 79) angeordnet ist, welcher auf einer relativ zum Exzenter ortsfesten Skala (80 bzw. 81) spielt.

## Claims

1. Apparatus dor dewatering water-containing substances, in particular sludge obtained in sewage treatment plants, wherein the preferably already dewatered material is passed between continuously moving water-permeable belts or screen belts (19, 24) through a gap (23) defined by said belts or screen belts, the screen belts (19, 24) or the like being supported in direction to the gap (23) by endless plate chains (21, 25) revolving around deflection and drive sprockets (28, 29), which endless plate chains are adjustable in direction to the gap (23), the plate chains (21, 25) being provided along their entire length with rollers (45, 46) which are supported against roller tracks (38), at least one of the roller tracks (38) being arbitrarily adjustable in direction transverse to the gap (23), the roller tracks (38) preferably being rigidly arranged on the frame (31, 32) on which also the deflection and drive sprockets (28 and 29) are supported and at least one of the frames (32) is adjustable in direction transverse to the gap (23), while the other frame (31) can be stationarily arranged, characterized in that the extremity of the roller track (38) or of the adjustable frame (32) facing the intake end of the gap (23) and the extremity of the roller track (38) or of the adjustable frame (32) facing the discharge end of the gap (23) can be adjusted independent of the respective other extremity in direction transverse to the gap, that eccentrics are supported in the area of the two extremities of the frames (31, 32) or of the roller tracks (38), which eccentrics are pivotally mounted on one of the frames (31) each or on one of the roller tracks (39) each and are pivotable by independent hydraulic cylinders and on which eccentrics pull and push rods (60 and 61, resp.) act which act on the other frame (32) or the other roller track (38), that the pull and push rods (60 and 61, resp.) act on the respective frame (32) or roller track (38) through the intermediary of springs (65) and that the springs (65) are compression springs housed in spring cups (63) that are rigidly connected to the respective frame (32), that the pull and push rods (60 and 61, resp.) are passed through a spring collar (67) of the spring cup (63) against which the compression spring (65) is supported, the other end of the compression spring (65) being supported against the opposite cover (64) of the cup (63) and said cover (64) being rigidly connected to the mantle of the cup (63) and supported against a flange (70) connected to the push and pull rod (60 and 61, resp.).

2. Apparatus according to claim 1, characterized in that the adjustable frame (32) is guided on the stationary frame (31) in a manner preventing displacement in longitudinal direction of the gap (23).

3. Apparatus according to any of claims 1 to 2, characterized in that the eccentrics (56 and 57, resp.) are supported on the stationary frame (31) or on the stationary roller track (38) and that the pull and push rods (60 and 61, resp.) act on the adjustable frame (32) or on the adjustable roller track (38) and that on either side of the plate chain eccentrics (56 and 57, resp.) are supported which are coupled to each other by way of an eccentric shaft (73 and 77, resp.)

4. Apparatus according to claim 3, characterized in that an eccentric lever (54 and 55, resp.) is rigidly connected to the eccentric (56 and 57, resp.) or the eccentric shaft (73 and 77, resp.), on which lever a hydraulic adjusting cylinder (50 and 51, resp.) acts that preferably can be subjected to the action of a pressure medium by means of a hand pump.

5. Apparatus according to any of claims 1 to 4, characterized in that on the eccentric (56 and 57, resp.) or on the eccentric shaft (73 and 77, resp.) a pointer (78 and 79, resp.) is arranged that plays on a scale (80 and 81, resp.) which is stationary in relation to the eccentric.

## Revendications

1. Dispositif pour déshydrater des matières contenant de l'eau, notamment de la boue se déposant dans des installations de clarification, dispositif dans lequel la matière est de préférence déjà pré-déshydratée et entraînée entre des bandes sans fin perméables à l'eau ou bien des bandes de filtrage (19, 24), au travers d'un intervalle (23) délimité par celles-ci, les bandes de filtrage ou autres analogues (19, 24) étant soutenues en direction de l'intervalle (23) par des chaînes de plaques sans fin (21, 25) passant autour d'étoiles de renvoi et d'entraînement (28, 29), réglables en direction de l'intervalle, lesdites chaînes de plaques (21, 25) étant équipées sur toute leur longueur de rouleaux (45, 46) qui s'appliquent contre des voies de roulement (38), au moins une des voies de roulement de rouleaux étant déplaçable à volonté dans une direction perpendiculaire audit intervalle (23), les voies de roulement (38) de rouleaux étant de préférence montées rigidement sur des châssis (31, 32), sur lesquels sont également tourillonnées les étoiles d'entraînement et de renvoi de chaîne, l'un au moins des châssis (32) étant déplaçable dans une direction perpendiculaire audit intervalle (23) tandis que l'autre châssis (31) peut être monté fixe, caractérisé en ce que celle des extrémités de la voie de roulement (38) de rouleaux ou du châssis mobile (32) qui est tournée vers l'extrémité d'entrée de l'intervalle (23) et celle des extrémités de la voie de roulement (38) de rouleaux ou du châssis réglable (32) qui est tournée vers l'extrémité de sortie de l'intervalle dont déplaçable chacune, indépendamment chaque fois de l'autre extrémité, dans une direction perpendiculaire à l'intervalle, en ce que sont prévus dans la zone des deux extrémités des châssis (31, 32) ou des voies de roulement (38) de rouleaux, des excentriques qui sont montés chacun à rotation sur un des châssis (31) ou une des voies de roulement (38) de rouleaux et peuvent être entraînés en rotation par des cyclindres hydrauliques indépendants, et sur lesquels s'accrochent des barres de traction et de pression (60, 61) qui s'accrochent sur l'autre châssis (32) ou sur l'autre voie de roulement (38) de rouleaux, en ce que les barres de traction et de pression (60, 61) s'accrochent avec interposition de ressorts sur le châssis (32) correspondant ou la voie de roulement (38) correspondante, et en ce que les ressorts (65) sont constitués par des ressorts de pression qui sont disposés dans des pots (63) reliés rigidement au châssis correspondant, en ce que les barres de traction et de pression (60, 61) traversent un plateau élastique (67) du pot (63) contre lequel prend appui le ressort de pression (65) dont l'autre extrémité s'applique contre le fond supérieur (64) du pot, fond lui-même relié rigidement à la périphérie du pot (63) et appliqué contre une collerette (70) reliée aux barres de traction et de pression (60, 61).

2. Dispositif selon la revendication 1, caractérisé en ce que le châssis mobile (32) est guidé sur le châssis fixe (31) en étant empêché de se déplacer dans la direction longitudinale de l'intervalle (23).

3. Dispositif selon l'une des revendications 1 et 2, caractérisé en ce que les excentriques (56, 57) sont montés sur le châssis fixe (31) ou bien sur la voie de roulement fixe (38) et en ce que les barres de traction et de pression (60, 61) s'accrochent sur le châssis mobile (32) ou bien sur la voie de roulement mobile (38) et en ce que, de chaque côté de la chaîne de plaques sont prévus des excentriques (56, 57) qui sont accouplés entre eux par l'intermédiaire d'un arbre (73, 77).

4. Dispositif selon la revendication 3, caractérisé en ce que les excentriques (56, 57) ou bien l'arbre à excentrique (73, 77) est relié rigidement à un levier à excentrique (54, 55) sur lequel s'accroche un vérin hydraulique de manœuvre (50, 51) qui peut être actionné par du fluide sous pression de préférence à l'aide d'une pompe à main.

5. Dispositif selon l'une quelconque des revendications 1 à 4, caractérisé en ce qu'il est prévu sur l'excentrique (56, 57) ou sur l'arbre à excentrique (73, 77) une aiguille index (78, 79) qui se déplace devant une échelle (80, 81) fixe par rapport à l'excentrique.

0 013 548

FIG. 1

FIG.3

FIG.5

FIG.2

FIG.4

## FIG.6